# EUROPÄISCHE PATENTSCHRIFT

(11) **EP 2 404 048 B1**
(45) Veröffentlichungstag und Bekanntmachung des Hinweises auf die Patenterteilung: **10.12.2014**
(21) Anmeldenummer: 10708750.4
(22) Anmeldetag: 25.02.2010
(51) Int. Cl.: F02D 41/22

(54) **VERFAHREN UND VORRICHTUNG ZUR ERKENNUNG EINER UNTERBRECHUNG IN EINER ELEKTRISCHEN ZULEITUNG**
METHOD AND DEVICE FOR RECOGNIZING AN INTERRUPTION IN AN ELECTRICAL SUPPLY LINE
PROCÉDÉ ET DISPOSITIF POUR IDENTIFIER UNE COUPURE AU NIVEAU D'UNE LIGNE D'ALIMENTATION ÉLECTRIQUE

(30) Priorität: 05.03.2009 DE 102009001351
(43) Veröffentlichungstag der Anmeldung: 11.01.2012
(73) Patentinhaber: Robert Bosch GmbH, 70442 Stuttgart (DE)
(72) Erfinder: BROX, Oliver, 70825 Korntal-Muenchingen (DE); KELLER, Stefan, 70327 Stuttgart (DE); VOLLMER, Heike, 70374 Stuttgart (DE)
(86) Internationale Anmeldenummer: PCT/EP2010/052370
(87) Internationale Veröffentlichungsnummer: WO 2010/100065

(56) Entgegenhaltungen:
- EP-A1- 0 529 302
- WO-A1-2008/009527

## Beschreibung

Die Erfindung betrifft ein Verfahren und eine Vorrichtung zur Erkennung einer vorübergehenden Unterbrechung einer elektrischen Zuleitung zwischen einem Steuergerät und einer Stelleinrichtung einer Brennkraftmaschine in einem Kraftfahrzeug und/oder der vorübergehenden fehlerhaften Verbindung der Zuleitung mit Betriebsspannung oder Masse.

### Stand der Technik

Kraftfahrzeuge weisen in ihrer elektrischen Anlage eine große Anzahl von Werteaufnehmern und Stelleinrichtungen auf, die mit einem oder mehreren Steuergeräten über Zuleitungen und Steckverbinder verbunden sind. Ein Ausfall einer Zuleitung oder eines Steckverbinders kann zu einer zumindest zeitweisen Betriebsstörung bis hin zum Stillstand des Kraftfahrzeugs führen. Es ist daher üblich, dass beispielhaft Signale von Werteaufnehmern auf Plausibilität hinsichtlich Minimal- und Maximalwert sowie einem erwarteten Messwert geprüft werden, dass gegebenenfalls Fehleranzeigen erfolgen und dass Fehlercodes in einem Fehlerspeicher hinterlegt werden. Ebenso werden die Zuleitungen zu Stelleinrichtungen und die Stelleinrichtungen selbst auf Kurzschlüsse und Unterbrechungen überwacht. Auch hier werden Fehler in einem Fehlerspeicher abgelegt. Fallen eine Zuleitung oder eine Komponente dauerhaft aus, ist dies bei einem Werkstattaufenthalt allgemein gut feststellbar und behebbar. Schwieriger gestaltet sich die Fehlerbehebung bei kurzzeitig auftretenden Unterbrechungen von Zuleitungen oder deren kurzzeitiger Verbindung zu Fahrzeugmasse oder Betriebsspannung. Hier tritt der Fehler oftmals beim Werkstattaufenthalt nicht auf, so dass wiederholte Untersuchungen vorgenommen werden müssen oder größere Teile der elektrischen Anlage probeweise ausgetauscht werden. Eine Lokalisierung der kleinsten fehlerhaften austauschbaren Komponente wäre hingegen vorteilhaft. So könnten beispielhaft Garantiekosten minimiert werden.

In so genannten Common-Rail-Einspritzsystemen wird der Kraftstoffdruck für die Einspritzung elektronisch geregelt. Dabei dient als Stellglied eine Kraftstoffzumesseinheit im Niederdruckteil vor der Hochdruckpumpe. Eine derartige Kraftstoffzumesseinheit ist beispielhaft aus der DE 19612413 bekannt. Eine fehlerhaft unterbrochene Zuleitung zu der Kraftstoffzumesseinheit wirkt sich in einem falschen Wert des Kraftstoffdrucks und damit in einer fehlerhaften Kraftstoffzumessung aus. Die Diagnose des Stromkreises der Kraftstoffzumesseinheit erstreckt sich nach dem Stand der Technik auf eine dauerhafte Unterbrechung der Zuleitungen und auf eine Diagnose der Endstufe der Kraftstoffzumesseinheit auf einen korrekten Wertebereich des Stroms durch die Endstufe dieses Stellers.

Aus der DD 238 017 ist eine Schaltungsanordnung zur Bremslichtkontrolle in Kraftfahrzeugen bekannt, bei der als Messwertgeber in Reihe mit der zu überwachenden Bremslichtlampe eine Diode geschaltet ist, welche einen Transistor steuert in der Weise, dass eine optische Positivanzeige dadurch realisiert wird, dass der Transistor (T) mit seinem Emitteranschluss über einen ohmschen Widerstand (R) mit dem lampenseitigen Anschluss der Diode (D) verbunden ist, und sein Kollektoranschluss über eine Lichtemittierende Diode (LED) mit Massepotential verbunden ist und wobei der Widerstand (R) so bemessen ist, dass er den Strom durch die Lichtemittierende Diode (LD) und damit ihren Helligkeitswert einstellt. Nachteilig an der Anordnung ist, dass eine kurzzeitige Leitungsunterbrechung nicht festgestellt werden kann und so eine Suche nach einem sporadisch auftretenden Fehler in einer Reparaturwerkstatt erschwert werden kann.

Aus der DE 10 2006 043 827 A1 ist ein Verfahren zur Überwachung der Ermittlung einer Betriebsgröße eines Fahrzeugs, insbesondere einer Brennkraftmaschine bekannt, wobei die Ermittlung der Betriebsgröße (B) dann als fehlerhaft erkannt wird, wenn von mehreren aufeinanderfolgenden, in der Anzahl (N) bestimmten Einzelermittlungsvorgängen (SR), jeder jeweils eine Abweichung von einem erwarteten Betriebsgrößen-Wert (I_{B}) aufweist. Kennzeichnend für vorübergehende Leitungsunterbrechungen ist jedoch, dass in vielen Fällen nur einzelne Einzelermittlungsvorgänge fehlerhafte Werte liefern und die Leitungsunterbrechungen nur kurzzeitig sind, so dass das beschriebene Verfahren nicht alle Fehlerbilder abdeckt.

Aus der DE 10 2006 054 316 A1 ist ein Verfahren zur Ermittlung eines Fehlers in einer Kraftstoffzumesseinheit eines Einspritzsystems für eine Brennkraftmaschine bekannt, bei dem der Gradient eines ersten eine physikalische Größe repräsentierenden Signals und eines zweiten eine physikalische Größe repräsentierenden Signals bestimmt werden und bei dem bei einer vorgegebenen Größe und/oder Richtung der beiden Gradienten auf einen Fehler erkannt wird. In einer Ausführungsform der Erfindung repräsentiert das erste Signal eine Spannung am Aktor der Kraftstoffzumesseinheit und das zweite Signal einen Strom durch den Aktor der Kraftstoffzumesseinheit. Es wird auf einen Fehler erkannt, wenn die Gradienten des ersten Signals und des zweiten Signals innerhalb eines Zeitfensters entgegengesetzt sind.

Nachteilig bei den beschriebenen Verfahren ist, dass kurzzeitige Unterbrechungen von Leitungen oder Steckkontakten nicht oder nur eingeschränkt festgestellt werden können. Insbesondere ist eine Fehlersuche in einer Reparaturwerkstatt wegen der nicht dauernd auftretenden Unterbrechung erschwert.

Es ist Aufgabe der Erfindung, ein Verfahren und eine Vorrichtung bereitzustellen, welche es erlauben, auch selten oder kurzzeitig auftretenden Unterbrechungen elektrischer Leitungen oder Steckverbinder festzustellen.

### Offenbarung der Erfindung

Die das Verfahren betreffende Aufgabe der Erfindung wird dadurch gelöst, dass die vorübergehende Unterbrechung und/oder fehlerhafte Verbindung mit einer Kennzeichnung der betroffenen Zuleitung in einem Fehlerspeicher als Unterbrechung erfasst wird. Erst durch eine solche Protokollierung des Ereignisses in dem Fehlerspeicher ist es bei einem Werkstattaufenthalt möglich, die fehlerhafte Zuleitung oder das fehlerhafte Bauteil zu identifizieren und somit das kleinste abgrenzbare Bauteil auszutauschen. Nach dem Stand der Technik werden teilweise bei Garantiefällen größere Baugruppen oder auch nicht defekte Baugruppen ausgetauscht um einen weiteren Werkstattaufenthalt zu vermeiden. Dies kann jedoch, beispielhaft bei elektronischen Steuergeräten, mit erheblichen Kosten verbunden sein.

Wird eine in einem vorgebbaren Zeitraum öfter als eine vorgebbare Mindestanzahl auftretende vorübergehende Unterbrechung und/oder fehlerhafte Verbindung der Zuleitung mit der Kennzeichnung der betroffenen Zuleitung in dem Fehlerspeicher als Fehler erfasst, kann bei der Diagnose mittels eines Prüfgeräts unterschieden werden, ob eine Unterbrechung nur einmalig oder selten auftrat und gegebenenfalls toleriert werden kann oder ob es sich um einen Fehler erheblicher Schwere handelt.

Wird die vorübergehende Unterbrechung der elektrischen Zuleitung zwischen dem Steuergerät und der Stelleinrichtung erkannt, indem kurzzeitige Abweichungen eines Signals einer Überwachung der Höhe der elektrischen Stromstärke durch die Stelleinrichtung als Fehlermerkmal gewertet werden, kann erreicht werden, dass auch graduelle Verschlechterungen von Verbindungen wie erhöhte Leitungswiderstände oder Übergangswiderstände in Steckverbindern, beispielhaft durch nachlassende Klemmkräfte oder Korrosion, erkannt werden können. Es kann dann auch ein Fehlerbild geringerer Schwere beobachtet und verfolgt werden, inwiefern das Fehlerbild sich verstärkt.

In einer Ausführungsform der Erfindung werden der Grad der Abweichung und/oder die Dauer der Abweichung der elektrischen Stromstärke bewertet und es wird bei Überschreitung eines vorgebbaren Grenzwerts die Unterbrechung in dem Fehlerspeicher erfasst. Beispielhaft werden nach dem Stand der Technik Fehler mit digitalen Werten bewertet. Bei einem Fehler geringer Schwere werden dabei nur die niederwertigen Bits gesetzt. Erfindungsgemäß ist daher vorgesehen, dass bei sehr kurzfristigen Unterbrechungen oder bei solchen, bei denen der Messwert nur wenig vom erwarteten Wert abweicht, nur die niederwertigen Bits eines Fehlerworts geändert werden.

Die die Vorrichtung betreffende Aufgabe der Erfindung wird dadurch gelöst, dass in der Steuerung ein Fehlerspeicher vorgesehen ist und dass Funktionen zur Erkennung und zur Ablage der vorübergehenden Unterbrechung und/oder fehlerhaften Verbindung der Zuleitung in dem Fehlerspeicher vorgesehen sind. Dadurch, dass auch vorübergehende Abweichungen vom Sollzustand der Zuleitungen erfasst und in dem Fehlerspeicher abgelegt werden, wird eine Fehlersuche erheblich erleichtert, da auch so genannte Wackelkontakte protokolliert werden, die durch ihr sporadisches Auftreten die Fehlersuche erschweren. Weiterhin kann jeweils die kleinste auszutauschende Komponente identifiziert werden, was Garantiekosten vermindern kann.

Werden das beschriebene Verfahren und die Vorrichtung zur Erkennung einer vorübergehenden Unterbrechung und/oder einer Verbindung mit Masse oder Betriebsspannung bei einer elektrischen Zuleitung zwischen einem Steuergerät und einer Zumesseinrichtung für Kraftstoff zum Betrieb einer Brennkraftmaschine zum Antrieb eines Kraftfahrzeugs angewendet, kann bereits eine geringe oder nur kurzfristige Verschlechterung der Zuleitung erkannt werden und es kann verhindert werden, dass die Steuerung, beispielhaft bei einer kurzfristigen Unterbrechung, mit einer nachfolgenden Erhöhung der Stromstärke durch die Zumesseinheit reagiert, was zu einer unbeabsichtigten Änderung des Luft-Kraftstoff-Verhältnisses führen kann.

### Kurze Beschreibung der Zeichnungen

Die Erfindung wird im Folgenden anhand eines in den Figuren dargestellten Ausführungsbeispiels erläutert. Es zeigt:

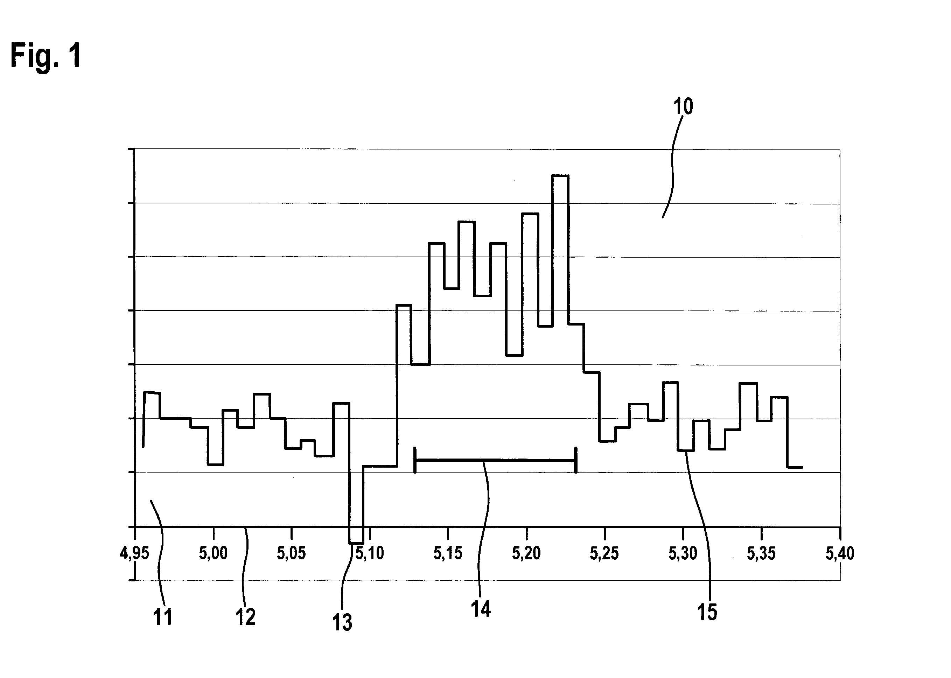

Figur 1 einen Signalverlauf des elektrischen Stroms durch einen Aktor einer Kraftstoffzumesseinrichtung

Figur 1 zeigt in einem Diagramm 10 den Verlauf eines Stromsignals 15 durch einen Aktor einer Kraftstoffzumesseinrichtung einer Brennkraftmaschine. Das Stromsignal 15 ist entlang einer Zeitachse 12 auf einer Signalachse 11 abgetragen. Im Verlauf des Stromsignals 15 ist ein Signalabfall 13 sichtbar, der von einer kurzen Unterbrechung einer Zuleitung des Aktors herrührt. Da die Unterbrechung nur etwa 0,7 Millisekunden andauert und nur ein Mal auftritt, führt eine der Kraftstoffzumesseinrichtung zugeordnete Steuereinheit keine Routine zur Entprellung durch. Der Signalabfall 13 führt jedoch zu einem nachfolgenden Überschwingbereich 14 des Stromsignals 15, der die Kraftstoffzumessung beeinflusst und damit zu einer unerwünschten Abweichung der Zusammensetzung des Luft-Kraftstoff-Gemischs und damit auch der Abgaszusammensetzung der Brennkraftmaschine führen kann. Eine Endstufen-Diagnose in der Steuereinheit detektiert eine solche kurzzeitige Unterbrechung und nimmt in einem Fehlersignal eine Wertänderung, beispielhaft an den niederwertigsten Bits des Werts, vor um ein Maß für eine Fehlerschwere darzustellen. Die Steuereinheit wertet dieses Fehlersignal nach dem Stand der Technik jedoch nicht aus. Eine sinngemäße Reaktion der Signale kann auch vorgesehen sein, wenn keine Unterbrechung einer Zuleitung sondern deren kurzzeitige Verbindung mit Masse oder Betriebsspannung auftritt.

Erfindungsgemäß werden in der Steuerung auch kurzfristige Unterbrechungen erfasst, die lediglich Änderungen der niederwertigen Bits des Fehlersignals bewirken, und in einem Fehlerspeicher registriert. Tritt eine solche kurzfristige Unterbrechung in einem vorgegebenen Zeitraum häufiger auf, kann dies zusätzlich nicht nur als Unterbrechung sondern als Fehler aufgefasst werden, es kann eine Anzeige erfolgen, die einen Fahrzeugführer von einem Fehlerzustand in Kenntnis setzt und es kann weiterhin ein Eintrag in dem Fehlerspeicher erfolgen.

## Patentansprüche

1. Verfahren zur Erkennung einer vorübergehenden Unterbrechung einer elektrischen Zuleitung zwischen einem Steuergerät und einer Stelleinrichtung einer Brennkraftmaschine in einem Kraftfahrzeug und/oder der vorübergehenden fehlerhaften Verbindung der Zuleitung mit Betriebsspannung oder Masse, **dadurch gekennzeichnet, dass** die vorübergehende Unterbrechung und/oder fehlerhafte Verbindung mit einer Kennzeichnung der betroffenen Zuleitung in einem Fehlerspeicher als Unterbrechung erfasst wird.

2. Verfahren nach Anspruch 1, **dadurch gekennzeichnet**, eine in einem vorgebbaren Zeitraum öfter als eine vorgebbare Mindestanzahl auftretende vorübergehende Unterbrechung und/oder fehlerhafte Verbindung der Zuleitung mit der Kennzeichnung der betroffenen Zuleitung in dem Fehlerspeicher als Fehler erfasst werden.

3. Verfahren nach Anspruch 1 oder 2, **dadurch gekennzeichnet, dass** die vorübergehende Unterbrechung der elektrischen Zuleitung zwischen dem Steuergerät und der Stelleinrichtung erkannt wird, indem kurzzeitige Abweichungen eines Signals einer Überwachung der Höhe der elektrischen Stromstärke durch die Stelleinrichtung als Fehlermerkmal gewertet werden.

4. Verfahren nach einem der Ansprüche 1 bis 3, **dadurch gekennzeichnet, dass** der Grad der Abweichung und/oder die Dauer der Abweichung der elektrischen Stromstärke bewertet werden und dass bei Überschreitung eines vorgebbaren Grenzwerts die Unterbrechung in dem Fehlerspeicher erfasst wird.

5. Vorrichtung zur Erkennung einer vorübergehenden Unterbrechung einer elektrischen Zuleitung zwischen einem Steuergerät und einer Stelleinrichtung einer Brennkraftmaschine in einem Kraftfahrzeug und/oder der vorübergehenden fehlerhaften Verbindung der Zuleitung mit Betriebsspannung oder Masse, **dadurch gekennzeichnet, dass** in der Steuerung ein Fehlerspeicher vorgesehen ist und dass Funktionen zur Erkennung und zur Ablage der vorübergehenden Unterbrechung und/oder fehlerhaften Verbindung der Zuleitung in dem Fehlerspeicher vorgesehen sind.

6. Anwendung des Verfahrens und der Vorrichtung nach einem der vorhergehenden Ansprüche zur Erkennung einer vorübergehenden Unterbrechung und/oder einer Verbindung mit Masse oder Betriebsspannung bei einer elektrischen Zuleitung zwischen einem Steuergerät und einer Zumesseinrichtung für Kraftstoff zum Betrieb einer Brennkraftmaschine zum Antrieb eines Kraftfahrzeugs.

## Claims

1. Method for detecting a temporary interruption of an electrical supply line between a controller and an actuator of an internal combustion engine in a motor vehicle, and/or for detecting the temporary faulty connection of the supply line to operating voltage or earth, **characterized in that** the temporary interruption and/or faulty connection is recorded in an error memory as an interruption with an identification of the affected supply line.

2. Method according to Claim 1, **characterized in that** a temporary interruption and/or faulty connection of the supply line occurring in a prescribable period more often than a prescribable minimum number are/is recorded in the error memory as an error with the identification of the affected supply line.

3. Method according to Claim 1 or 2, **characterized in that** the temporary interruption of the electrical supply line between the controller and the actuator is detected by having the actuator evaluate as error characteristic brief deviations of a signal monitoring the level of the electrical current intensity.

4. Method according to one of Claims 1 to 3, **characterized in that** the degree of the deviation and/or the duration of the deviation of the electrical current intensity are/is evaluated, and **in that** the interruption is recorded in the error memory upon overshooting of a prescribable limit value.

5. Device for detecting a temporary interruption of an electrical supply line between a controller and an actuator of an internal combustion engine in a motor vehicle, and/or for detecting the temporary faulty connection of the supply line to operating voltage or earth, **characterized in that** an error memory is provided in the controller, and **in that** functions for detecting and storing the temporary interruption and/or faulty connection of the supply line in the error memory are provided.

6. Application of the method and of the device according to one of the preceding claims to detect a temporary interruption and/or a connection to earth or operating voltage in the case of an electrical supply line between a controller and a dosing device for fuel for operating an internal combustion engine to drive a motor vehicle.

## Revendications

1. Procédé pour identifier une coupure passagère d'une ligne d'alimentation électrique entre un appareil de commande et un dispositif de réglage d'un moteur à combustion interne placé dans un véhicule automobile et/ou une liaison défaillante passagère de la ligne d'alimentation avec la tension d'alimentation ou la masse, **caractérisé en ce que** la coupure passagère et/ou la liaison défaillante est détectée comme coupure à l'aide d'une caractéristique de la ligne d'alimentation concernée dans une mémoire d'erreurs.

2. Procédé selon la revendication 1, **caractérisé en ce qu'**une coupure et/ou une liaison défaillante passagère, survenant pendant un laps de temps prédéfinissable supérieur à un nombre minimal prédéfinissable, de la ligne d'alimentation est détectée comme une erreur dans la mémoire d'erreurs à l'aide de la caractéristique de la ligne d'alimentation concernée.

3. Procédé selon la revendication 1 ou 2, **caractérisé en ce que** la coupure passagère de la ligne d'alimentation électrique entre l'appareil de commande et le dispositif de réglage est détectée lorsque le dispositif de réglage analyse comme caractéristique défaillante la présence d'écarts de courte durée d'un signal de surveillance de la hauteur de la puissance du courant électrique.

4. Procédé selon l'une quelconque des revendications 1 à 3, **caractérisé en ce que** le degré de l'écart et/ou la durée de l'écart de la puissance du courant électrique sont analysés et qu'en cas de dépassement d'une valeur limite prédéfinissable, la coupure est saisie dans la mémoire d'erreurs.

5. Dispositif d'identification d'une coupure passagère d'une ligne d'alimentation électrique entre un appareil de commande et un dispositif de réglage d'un moteur à combustion interne placé dans un véhicule automobile et/ou de la liaison défaillante passagère de la ligne d'alimentation avec la tension d'alimentation ou la masse, **caractérisé en ce qu'**une mémoire d'erreurs est prévue dans l'élément de commande et que des fonctions d'identification et de mémorisation de la coupure passagère et/ou d'une liaison anormale de la ligne d'alimentation sont prévues dans la mémoire d'erreurs.

6. Application du procédé et du dispositif selon l'une quelconque des revendications précédentes pour identifier une coupure passagère et/ou une liaison avec la masse ou la tension d'alimentation pour une ligne d'alimentation électrique entre un appareil de commande et un dispositif de mesure du carburant servant à actionner un moteur à combustion interne pour l'entraînement d'un véhicule automobile.
